# EUROPEAN PATENT SPECIFICATION

(11) **EP 3 249 000 B1**
(45) Date of publication and mention of the grant of the patent: **27.09.2023**
(21) Application number: 16840304.6
(22) Date of filing: 30.03.2016
(51) Int. Cl.: C08G 65/02, C08G 65/26, C08G 65/12

(54) **METHOD FOR CIRCULARLY PREPARING POLYETHER POLYOL BY USING DMC CATALYST**
VERFAHREN ZUR KREISFÖRMIGEN HERSTELLUNG VON POLYETHERPOLYOL MIT EINEM DOPPELMETALLCYANID(DMC)-KATALYSATOR
PROCÉDÉ DE PRÉPARATION DE MANIÈRE CIRCULAIRE D'UN POLYÉTHER POLYOL EN UTILISANT UN CATALYSEUR DMC

(30) Priority: 18.03.2016 CN 201610155418
(43) Date of publication of application: 29.11.2017
(73) Proprietor: Huaian Bud Polyurethane Science&technology Co.,Ltd, Huaian, Jiangsu 223300 (CN)
(72) Inventor: QI, Weixin, Huaian Jiangsu 223300 (CN); HU, Bing, Huaian Jiangsu 223300 (CN); HAN, Yong, Huaian Jiangsu 223300 (CN)
(74) Representative: Laufhütte, Dieter
(86) International application number: PCT/CN2016/077845
(87) International publication number: WO 2017/156797

(56) References cited:
- EP-A2- 1 911 787
- WO-A1-2012/091968
- WO-A1-2014/150761
- CA-C- 2 328 453
- CN-A- 1 225 652
- CN-A- 103 732 651
- US-A- 5 679 764
- US-A1- 2011 230 581
- US-A1- 2013 345 476
- US-A1- 2014 275 633

## Description

### Technical Field

The present invention relates to the technical field of polyether polyol production method, and particularly to a method for cyclically preparing an intermediate target polyether polyol by using a DMC catalyst and for preparing a target polyether polyol with the intermediate target polyether polyol.

### Related Art

At present, in the production of polyether polyol with a DMC catalyst at home and abroad, a raw material low molecular weight alcohol, for example, propylene glycol (diol) or glycerol (triol) is generally used, and propylene oxide or a mixture of propylene oxide and ethylene oxide is introduced in the presence of an ordinary base catalyst, for example, potassium hydroxide, to prepare a low molecular weight polyether diol or triol having a molecular weight of about 400 or about 600. The low molecular weight polyether is then subjected to troublesome and complex processes such as neutralization with phosphoric acid, dewatering by adsorption with an adsorbent, and filtering, during which about 2% polyether is lost, causing great trouble to environment protection. Meanwhile, the low molecular weight polyether prepared with a base catalyst has a heavy odor due to a high degree of unsaturation, and thus the target product prepared therewith is caused to have an obvious odor. The prepared low molecular weight polyether is degassed at a temperature, dewatered, and reacted with propylene oxide or a mixture of propylene oxide and ethylene oxide in the presence of a DMC catalyst, to prepare the target product, where the induction time is generally ten more minutes to 1 hr or longer.

Patent No. CN97192141.5 discloses a method for preparing a polyether with a polyol in the presence of a double metal cyanide catalyst by continuously adding the initiating material. The process for preparing the polyether by the method is unstable, and the initiating material continuously added during reaction may easily cause the catalyst to be inactivated, and the inactivated catalyst is difficult to be further inducted, causing the whole reaction to fail to proceed directly. Moreover, the product obtained from the final reaction has a heavy odor, and a wide molecular weight distribution (weight average molecular weight/number average molecular weight). Therefore, the practical application is difficult.

Further, during the reaction process, propylene glycol is mixed with the alkylene oxide and then added to the reaction system, or they are fed at the same time and then the feed is terminated at the same time, which directly affects the molecular weight distribution and hydroxyl value of the finally obtained product.

Patent No. CN03155029.0 discloses a reactive initiating mixture and related method. The target polymer produced from the method has a low molecular weight, and thus the method cannot be used in the production of a long-chain polyether. Furthermore, in the method examples, the raw material low molecular weight alcohol is not added continuously, which leads to a high content of the raw material low molecular weight alcohol in the reaction system, thus causing a too long induction time and reaction time. EP1911787 provides a process for the production of a polyether involving establishing oxyalkylation conditions in an oxyalkylation reactor in the presence of from about 5 ppm to about 1,000 ppm, based on the final polyether weight, of a double metal cyanide (DMC) catalyst, continuously introducing into the reactor at least one alkylene oxide and a low molecular weight starter having a number average molecular weight of less than about 300 Daltons (Da) containing from about 200 ppm to about 5,000 ppm water and acidified with from about 10 ppm to about 2,000 ppm of at least one of an inorganic protic mineral acid and an organic acid, and recovering, a polyether product having a number average molecular weight of from about 200 Da to about 4,000 Da, wherein the ppm (parts per million) of water and acid are based on the weight-of the low molecular weight starter.

Patent No. CN200710138709.8 discloses a method for producing a polyether resistant to high water content. The method mainly aims to produce a polyether resistant to high water content, and the influence of water content in the initiating material after reaction. This method is used to directly produce the target polymer, and the yield is low. During the continuous production process, the induction time of the reaction is long. In the production of polyether in the examples, the addition of propylene glycol and propylene oxide occurs and terminates at the same time, which causes the finally produced target product to have a wide molecular weight distribution (weight average molecular weight/number average molecular weight), thus affecting the performance of the target product.

Patent No. CN201010217182.X discloses a method for producing a short-chain polyether polyol with a initiating material having ultra-low water content in the presence of a DMC catalyst. The product produced from the method is a short-chain polyether polyol. The initiating material is a low molecular weight raw material alcohol having less than 500 ppm of water, which has a narrow scope of application. Moreover, the method cannot be used in the production of a long-chain polyether polyol. Further, the short-chain polyether polyol produced during the reaction process requires post-processing, which greatly increases the discharge of solid waste and waste liquid from the reaction, and enhances the production cost. In the reaction examples, glycerol and propylene oxide are continuously and simultaneously charged, which causes the product to have a wide molecular weight distribution.

Patent No. CN201280015084.5 discloses a method for producing a short-chain multi-functional polyether polyol by using a super acid and a double metal cyanide catalyst. The target product produced from the method is a short-chain multi-functional polyether polyol, and the initiating compound is a low molecular weight substance having 3 to 9 hydroxyl groups, such that a monohydric alcohol and a dihydric alcohol is difficult to be used directly. Meanwhile, the examples show that during the production of the target polymer, the charge of a propylene oxide and a low molecular weight raw material alcohol such as glycerol at the same time causes the reaction rate to slow down, and finally the reaction to terminate prematurely.

In contrast, in the production method of the present invention, a low molecular weight polyether initially prepared with a base catalyst is used as a raw material, which is also referred to as a base material, for example a polyether diol or triol having a molecular weight of about 400 or 600 as a base material. An amount of DMC catalyst is added, and inducted. Propylene glycol or glycerol and propylene oxide or a mixture of propylene oxide with ethylene oxide are proportionally introduced, to be prepared into a pot. A part of the pot is taken, and the DMC catalyst is supplemented such that the amount of the DMC catalyst in the final product reaches a normally needed amount, for example 30 ppm. At a certain temperature and with almost no induction time, propylene oxide or a mixture of propylene oxide with ethylene oxide is introduced, to achieve the final molecular weight. For example, a polyether diol generally has a molecular weight of 1000, 2000, and 4000, a polyether triol generally has a molecular weight of 3000, and so on. However, the target molecular weight is not limited thereto.

### SUMMARY

In view of the above problems, an objective of the present invention is to provide a method for cyclically preparing an intermediate target polyether polyol by using a DMC catalyst and for preparing a target polyether polyol with the intermediate target polyether polyol, which is simple in operation and convenient for production, can reduce the production cost, and has high practical applicability.

To achieve the above objective, the following technical solution is adopted in the present invention. A method for cyclically preparing a polyether polyol by using a DMC catalyst is provided. In the method, a low molecular weight alcohol is used as a raw material, which is polymerized with an alkylene oxide, to obtain a low molecular weight polymer. The low molecular weight polymer is used as an initiator, a DMC is used as a catalyst, and an acid is used as a promoter; during the reaction of the low molecular weight polymer with the alkylene oxide, an amount of raw material low molecular weight alcohol is introduced, to prepare a target intermediate polymer. A part of the prepared target intermediate polymer is used for preparing the target polymer, and the other part is recycled for preparing the target intermediate polymer. The target intermediate polymer has the same average molecular weight as that of the low molecular weight polymer.

In the present invention, the DMC catalyst is a double metal cyanide complex catalyst for ring opening polymerization of epoxy.

In the present invention, the acid is any one of nitric acid, phosphoric acid, and sulfuric acid, or a mixture of any two or three thereof.

In the present invention, the alkylene oxide is one of propylene oxide, butylene oxide, a mixture of ethylene oxide and propylene oxide, a mixture of ethylene oxide and butylene oxide, a mixture of propylene oxide and butylene oxide, and a mixture of ethylene oxide, propylene oxide, and butylene oxide.

In the present invention, the raw material low molecular weight alcohol is a monohydric alcohol or a polyhydric alcohol, the monohydric alcohol is one of allyl alcohol or butanol, and the polyhydric alcohol is one of ethylene glycol, propylene glycol, butylene glycol, and glycerol.

During the preparation of the target polymer in the present invention, the target intermediate polymer is used as an initiator, the DMC is used as a catalyst, and the acid is used as a promoter, and during the reaction, an amount of raw material low molecular weight alcohol is introduced at the same time when the alkylene oxide is introduced.

The present invention is defined in the claims. The method for cyclically preparing a polyether polyol by using a DMC catalyst provided in the present invention comprises the steps of
1) adding the low molecular weight polymer as the initiator to a reactor, wherein the low molecular weight polymer is pre-added with the DMC catalyst and the acid; evacuating, heating, and dewatering by bubbling nitrogen for at least 10 min at a temperature of 100-175°C under vacuum at a pressure of not higher than -0.085 Mpa; and then closing the nitrogen source, and further evacuating for at least 10 min;
2) after dewatering, introducing the alkylene oxide in an amount that is no more than 20% by weight (wt%) of the low molecular weight polymer initiator in Step 1), such that the pressure in the reactor is induced to decrease obviously, and the temperature is induced to rise obviously;
3) while keeping the temperature at 120-180°C and the pressure not higher than 0.2 Mpa, simultaneously continuously adding metered alkylene oxide and raw material low molecular weight alcohol; leaving over at least 10 wt% of the alkylene oxide for being added after the addition of the low molecular weight alcohol is completed; after the alkylene oxide is completely charged, fully reacting until there is no obvious decrease in the pressure in the reactor, and evacuating; and discharging after the temperature drops to 70-80°C, to obtain the target intermediate polymer, wherein a part of the target intermediate polymer is used for preparing the target polymer, and a part is reserved for being recycled back to prepare the target intermediate polymer;
4) adding the target intermediate polymer obtained in Step 4) to a reactor, wherein the target intermediate polymer is pre-added with the DMC catalyst and the acid; evacuating, heating, and dewatering under vacuum by bubbling nitrogen for at least 10 min at a temperature of 100-175°C under a pressure of not higher than -0.085 Mpa; then closing the nitrogen source, and further evacuating for at least 10 min;
5) after dewatering, stopping evacuating, and introducing the alkylene oxide in an amount that is no more than 20 wt% of the target intermediate polymer in Step 4), such that the pressure in the reactor is induced to decrease obviously, and the temperature is induced to rise obviously;
6) while keeping the temperature at 120-180°C and the pressure not higher than 0.2 Mpa, simultaneously continuously adding metered alkylene oxide and raw material low molecular weight alcohol; leaving over at least 10 wt% of the alkylene oxide for being added after the addition of the low molecular weight alcohol is completed; after the alkylene oxide is completely charged, fully reacting until there is no obvious decrease in the pressure in the reactor, and evacuating; and discharging after the temperature drops to 70-80°C, to obtain the target polymer; and
7) with the target intermediate polymer obtained Step 3) as an initiator, cyclically preparing the target intermediate polymer and the target polymer following the operation in Steps 1-6.

In the present invention, when the target polymer is a polyoxyalkylene ether mono-ol, the average molecular weight of both the low molecular weight polymer and the target intermediate polymer is 200-600, and preferably 300-500.

In the present invention, when the target polymer is a polyoxyalkylene ether diol, the average molecular weight of both the low molecular weight polymer and the target intermediate polymer is 400-1000 and preferably 500-700.

In the present invention, when the target polymer is a polyoxyalkylene ether triol, the average molecular weight of both the low molecular weight polymer and the target intermediate polymer is 500-1200 and preferably 700-1000.

In the present invention, when the alkylene oxide is a mixture containing ethylene oxide, the content of ethylene oxide in the mixture is not higher than 80%.

In the present invention, the content of K⁺ and Na⁺ in the low molecular weight polymer initiator in Step 1) is <10 ppm, and preferably < 5 ppm.

In the present invention, the DMC catalyst is used in Step 1) in an amount of 10-600 ppm, preferably 20-120 ppm, and more preferably 30-100 ppm based on the weight of the target intermediate polymer finally obtained in Step 3).

In the present invention, the DMC catalyst is used in Step 4) in an amount of 0-500 ppm, preferably 20-60 ppm, and more preferably 20-40 ppm based on the weight of the target polymer finally obtained in Step 6).

In the present invention, the acid in Steps 1), 3), 4) and 6) is preferably sulfuric acid, phosphoric acid, and a mixture thereof.

In the present invention, the low molecular weight polymer initiator in Steps 1) and 4) contains no more than 200 ppm and preferably no more than 80 ppm acid.

In the present invention, the raw material low molecular weight alcohol in Steps 3) and 6) contains no more than 200 ppm and preferably no more than 80 ppm acid.

In the present invention, the dewatering temperature in Steps 1) and 4) is preferably 130-165°C, and the dewatering pressure is preferably below -0.095 Mpa, the time of dewatering under vacuum by bubbling nitrogen is preferably 40-90 min, and after closing the nitrogen source, the re-evacuating time is preferably 20-40 min.

In the present invention, the amount of the alkylene oxide used in Step 2) for initiating the reaction is no more than 3-10 wt% of the low molecular weight initiator in Step 1).

In the present invention, the amount of the alkylene oxide used in Step 5) for initiating the reaction is no more than 3-10 wt% of the target intermediate polymer in Step 4).

In the present invention, the addition of the low molecular weight alcohol in Steps 3) and 6) is completed ahead of the alkylene oxide, and preferably 20-40 wt% of the total weight of the alkylene oxide is reserved for being added after the addition of the low molecular weight alcohol is completed.

In the present invention, the alkylene oxide is preferably added in Steps 3) and 6) at a temperature of 130-160°C, and the feed pressure is preferably below 0.03 Mpa, and more preferably below -0.05 Mpa.

The present invention has the following advantages. In the present invention, the raw material low molecular weight alcohol and the low molecular weight polyether polyol initiator react in the presence of the DMC catalyst, to prepare the target intermediate polymer, that is, the low molecular weight polyether polyol initiator, a part of the prepared target intermediate polymer is used for preparing the target polymer, that is, a polyether polyol having a molecular weight greater than that of the target intermediate polymer, and the other part is recycled to prepare the target intermediate polymer itself with the raw material low molecular weight alcohol in the presence of the DMC catalyst.

Compared with an existing method for preparing a high molecular weight target product from a low molecular weight polyether polyol initiator, in the present invention, after cyclically preparing the target intermediate polymer polyether polyol initiator and then preparing the target polymer, there is no need to use the low molecular weight polyether polyol prepared with a base catalyst as an initiator at each time. Therefore, the present invention is advantageous over the commonly used process at present in that

The loss of material is reduced. When a base catalyst is used to prepare a low molecular weight polyether polyol initiator, about of 2% polyether is lost during the refining process of the polyether. In the present invention, the base catalyst is used only at the first time when the initiator is prepared, thus greatly reducing the loss of material.

The discharge of filter residue and waste water is reduced. When a base catalyst is used to prepare a low molecular weight polyether polyol initiator, about 3% filter residue and about 5% waste water are produced during the refining process of the polyether. In the present invention, the base catalyst is used only at the first time when the initiator is prepared, thus greatly reducing the discharge of the filter residue and waste water.

The number of apparatuses used in present invention is lowered greatly, for example, a dedicated reactor for making the low molecular weight polyether initiator, a corresponding post-processing unit and supporting facilities can be omitted.

The target polymer prepared in the present invention has an extremely weak odor.

During the preparation of the target intermediate polymer in the present invention, because the DMC catalyst is used in a relatively large amount and the induction time is quite short, and generally several minutes, when the target intermediate polymer is used to prepare the target polymer, the catalyst has already been activated and almost no induction time is needed, thus greatly reducing the dewatering time and induction time, and improving the utility of the apparatus.

### DETAILED DESCRIPTION

The present invention is described in further detail with reference to specific embodiments.

It should be noted that the raw materials used in reaction examples below are merely raw materials used for production in the present invention, and the protection scope of the present invention is not limited thereto.

The DMC catalyst used in the present invention is prepared following the method as described in ZL200710019506.7; however the double metal cyanide complex catalysts prepared following the method as described in CN201410121198.9, CN03813844.1, and CN200680024203.8 are also useful in the present invention.

### Example 1: First preparation of target intermediate polymer polyoxypropylene propylene glycol ether (M ₙ=600) from initiator polyoxypropylene propylene glycol ether (M ₙ=600) and propylene glycol

1) To a 10 m³ autoclave equipped with an external circulating pump, 2200 Kg polyoxypropylene propylene glycol ether (M ₙ=600) initiator (which might be prepared with a conventional KOH catalyst, contained <5 ppm K and Na ions, and was premixed with 66 g concentrated sulfuric acid) was added and then 402 g DMC catalyst was added, stirred, purged with nitrogen, evacuated, and heated. The external circulating pump was activated, and dewatering was performed under vacuum by bubbling nitrogen for 60 min at a temperature of 135-145°C under a pressure of below -0.095 Mpa. The nitrogen source was closed, and the autoclave was evacuated for an additional 20 min.
2) The vacuum valve was closed to stop evacuating, and 176 Kg propylene oxide was introduced. After 15 min, the pressure in the autoclave decreased obviously, and the temperature rose obviously, indicating the initiation of the reaction.
3) While the temperature was kept at 150-160°C, and the pressure was kept below -0.02 Mpa, 3395 Kg propylene oxide and 740 Kg propylene glycol (premixed with 37 g concentrated sulfuric acid) were simultaneously continuously added. After the addition of propylene oxide and propylene glycol was completed after 220 min, 1531 kg propylene oxide was further added. After 80 min, the addition of propylene oxide was completed, and the system was reacted fully until there was no obvious decrease in the pressure in the autoclave. The autoclave was evacuated to remove remaining gas, and then the vacuum valve was closed to stop evacuating. The material was discharged after the temperature was cooled to 70-80°C, to obtain a target intermediate polymer polyoxypropylene propylene glycol ether (M ₙ=600), a part of which was used for preparing the target polymer, and the other part of which was reserved for being recycled back to prepare the target intermediate polymer polyoxypropylene propylene glycol ether (M ₙ=600).

The finally obtained target intermediate polymer polyoxypropylene propylene glycol ether (M ₙ=600) was analyzed to have a DMC content of 50 ppm, a hydroxyl value (mg KOH/g) of 188.74, a viscosity (25°C, mpa·s) of 107, and a molecular weight distribution (weight average molecular weight/number average molecular weight) D of 1.14.

### Example 2: Preparation of polyoxyethylene/propylene propylene glycol ether (M ₙ=2000) from target intermediate polymer polyoxypropylene propylene glycol ether (M ₙ=600)

1) To a 10 m³ autoclave equipped with an external circulating pump, 2400 Kg target intermediate polymer polyoxypropylene propylene glycol ether (M ₙ=600) prepared in Example 1 was added as an initiator, and then 120 g DMC catalyst was added, stirred, purged with nitrogen, evacuated, and heated. The external circulating pump was activated, and the autoclave was evacuated for 30 min at a temperature of 135-145°C under a pressure of below -0.095 Mpa.
2) The vacuum valve was closed to stop evacuating, and 192 Kg alkylene oxide mixture (in which ethylene oxide/propylene oxide was 2:8) was introduced. During addition, the temperature rose obviously, indicating the initiation of the reaction.
3) While the temperature was kept at 130-135°C, and the pressure was kept below 0.02 Mpa, 5408 Kg alkylene oxide mixture (in which ethylene oxide/propylene oxide was 2:8) was simultaneously continuously introduced. After the addition of the alkylene oxide mixture was completed after 160 min, the system was reacted fully until there was no obvious decrease in the pressure in the autoclave. The autoclave was evacuated to remove remaining gas, and then the vacuum valve was closed to stop evacuating. The material was discharged after the temperature was cooled to 70-80°C, to obtain the target polymer polyoxyethylene/propylene propylene glycol ether (M ₙ=2000).

The finally obtained target polymer polyoxyethylene/propylene propylene glycol ether (M ₙ=2000) was analyzed to have a DMC content of 30 ppm, a hydroxyl value (mg KOH/g) of 55.81, a viscosity (25°C, mpa·s) of 300, and a molecular weight distribution (weight average molecular weight/number average molecular weight) D of 1.04.

### Example 3: Cyclic preparation of target intermediate polymer polyoxypropylene propylene glycol ether (Mₙ=600) from target intermediate polymer polyoxypropylene propylene glycol ether (M ₙ=600) and propylene glycol

1) To a 10 m³ autoclave equipped with an external circulating pump, 1800 Kg target intermediate polymer polyoxypropylene propylene glycol ether (M ₙ=600) prepared in Example 1 was added as an initiator (premixed with 54 g concentrated sulfuric acid), and then 310 g DMC catalyst was added, stirred, purged with nitrogen, evacuated, and heated. The external circulating pump was activated, and the autoclave was evacuated for 30 min at a temperature of 135-145°C under a pressure of below -0.095 Mpa.
2) The vacuum valve was closed to stop evacuating, and 144 Kg propylene oxide was introduced. During addition, the temperature rose obviously, indicating the initiation of the reaction.
3) While the temperature was kept at 150-160°C, and the pressure was kept below -0.02 Mpa, 3645 kg propylene oxide and 785 kg propylene glycol (premixed with 39 g concentrated sulfuric acid) were simultaneously continuously added. After the addition of propylene oxide and propylene glycol was completed after 200 min, 1624 kg propylene oxide was further added. After 80 min, the addition of propylene oxide was completed, and the system was reacted fully until there was no obvious decrease in the pressure in the autoclave. The autoclave was evacuated to remove remaining gas, and then the vacuum valve was closed to stop evacuating. The material was discharged after the temperature was cooled to 70-80°C, to obtain a target intermediate polymer polyoxypropylene propylene glycol ether (M ₙ=600), a part of which was used for preparing the target polymer, and the other part of which was reserved for being recycled back to prepare the target intermediate polymer polyoxypropylene propylene glycol ether (M ₙ=600).

The finally obtained target intermediate polymer polyoxypropylene propylene glycol ether (M ₙ=600) was analyzed to have a DMC content of 50 ppm, a hydroxyl value (mg KOH/g) of 185.96, a viscosity (25°C, mpa·s) of 112, and a molecular weight distribution (weight average molecular weight/number average molecular weight) D of 1.17.

### Comparative Example 1 (corresponding to Examples 1 and 3): Preparation of target intermediate polymer polyoxypropylene propylene glycol ether (M ₙ=600) from low molecular weight raw material alcohol propylene glycol

1) To a 10 m³ autoclave equipped with an external circulating pump, 1013 Kg propylene glycol was added as an initiator, and then 24 kg KOH was added as a catalyst, stirred, purged with nitrogen, and evacuated for 5 min. Then, the external circulating pump was activated.
2) The vacuum valve was closed to stop evacuating, and 100 Kg propylene oxide was introduced at a temperature ranging from 110 to 120°C. Then, the temperature rose slowly and the pressure decreased slowly, indicating the initiation of the reaction.
3) While the temperature was kept at 110-120°C, and the pressure was kept below 0.4 Mpa, 6887 kg propylene oxide was added continuously. After 300 min, the addition of propylene oxide was completed, and the system was reacted fully until there was no obvious decrease in the pressure in the autoclave. The autoclave was evacuated to remove remaining gas, and then the vacuum valve was closed to stop evacuating. After the temperature was cooled to 90-100°C, the material was transferred to a post-processing unit.
4) 400 kg water was added to the post-processing unit, and stirred for 30 min. 45 kg of 85% phosphoric acid was added and stirred for 60 min. 12 kg refining agent and 16 kg clay were added and stirred for 30 min. Dewatering was conducted for 4 hrs at 110-120°C under -0.095 Mpa. After filtering, cooling, and discharging, the target intermediate polymer polyoxypropylene propylene glycol ether (M ₙ=600) was obtained, which was totally used to prepare the target polymer.

The finally obtained target intermediate polymer polyoxypropylene propylene glycol ether (M ₙ=600) was analyzed to have a hydroxyl value (mg KOH/g) of 185.96, a viscosity of (25°C, mpa·s) 102; a K and Na content of less than 5 ppm, and a molecular weight distribution (weight average molecular weight/number average molecular weight) D of 1.24.

A part of the target intermediate polymer prepared with a base catalyst in Example 1 is used to prepare the target polymer in Example 2, and the other part is recycled to prepare the target intermediate polymer in the presence of the DMC catalyst in Example 3, so that no target intermediate polymer prepared with a base catalyst is used in further preparation of the target polymer. However, the target intermediate polymer prepared with a base catalyst in Comparative Example 1 is totally used to prepare the target polymer, so the process for preparing the needed target intermediate polymer with a base catalyst in Comparative Example 1 is repeated when the target polymer is further prepared. Therefore, in the present invention, once the target intermediate polymer is started to be prepared cyclically, no post-processing is needed, thereby reducing the production time, lowering the loss of material and energy consumption, and decreasing the discharge of filter residue and waste water.

Under the same conditions, the production time, the loss of material per unit of product, the energy consumption, and the discharge amounts of solid waste and waste water resulting from prior art processes and the present method for preparing different products are listed in a table below.

| Raw material low molecular weight alcohol | | Target polymer Mₙ | Process | Yield t | Post-processing time min/ton of product | Induction time min/reactor | Dewatering time min/reactor | Loss of material kg/ton of product | Filter residue kg/ton of product | Waste water kg/ton of product |
|---|---|---|---|---|---|---|---|---|---|---|
| Monohydric alcohol | Allyl alcohol | 1500 | The present invention | 90 | 6 | <2 | 30 | 2.5 | 2.5 | 4.2 |
| | | | Prior art | | 18 | 16 | 80 | 8 | 8 | 13 |
| | | 900 | The present invention | 36 | 15 | <2 | 30 | 7 | 7 | 11 |
| | | | Prior art | | 45 | 16 | 80 | 20 | 20 | 33 |
| Dihydric alcohol | Ethylene glycol | 1600 | The present invention | 64 | 8 | <2 | 30 | 4 | 4 | 6 |
| | | | Prior art | | 25 | 16 | 80 | 12 | 12 | 19 |
| | Propylene glycol | 2000 | The present invention | 80 | 7 | <2 | 30 | 3 | 3 | 5 |
| | | | Prior art | | 21 | 16 | 80 | 9 | 9 | 15 |
| | Butylene glycol | 2500 | The present invention | 100 | 5 | <2 | 30 | 2 | 2 | 4 |
| | | | Prior art | | 16 | 17 | 80 | 7 | 7 | 12 |
| Trihydric alcohol | Glycerol | 3000 | The present invention | 90 | 6 | <2 | 30 | 2.5 | 2.5 | 4.2 |
| | | | Prior art | | 18 | 16 | 80 | 8 | 8 | 13 |
| Remark | 1. The loss of material, filter residue, and waste water in the table include exclusively the loss, filter residue, and waste water resulting from the process itself. | | | | | | | | | |
| | With the increase of the yield, that is, with the increase of the cycle number, the target intermediate polymer used in the present invention requires no post-processing, and thus no new post-processing time, filter residue, and waste water are produced, whereby the post-processing time, filter residue, and waste water are approximately 0. | | | | | | | | | |
| | With the increase of the yield, after the target intermediate polymer prepared with a base catalyst in the prior art is consumed totally, the target intermediate polymer prepared with a base catalyst has to be produced and post-processed again, so the post-processing time, filter residue, and waste water are produced again, whereby the post-processing time, filter residue, and waste water are approximately a constant value. | | | | | | | | | |
| | The loss of material is calculated based on the whole process from the preparation of the target intermediate polymer from a low molecular weight raw material alcohol and then to the preparation of the target polymer from the target intermediate polymer. | | | | | | | | | |

### Example 4: Preparation of polyoxypropylene ether (Mₙ=3000) from target intermediate polymer polyoxypropylene glycerol ether (M ₙ=800) and glycerol

1) To a 10 m³ autoclave equipped with an external circulating pump, 800 Kg cyclically prepared target intermediate polymer polyoxypropylene glycerol ether (M ₙ=800) was added as an initiator (premixed with 24 g phosphoric acid), and then 182 g DMC catalyst was added, stirred, purged with nitrogen, evacuated, and heated. The external circulating pump was activated, and the autoclave was evacuated for 30 min at a temperature of 135-145°C under a pressure of below -0.095 Mpa.
2) The vacuum valve was closed to stop evacuating and 64 Kg propylene oxide was introduced. During addition, the temperature rose obviously, indicating the initiation of the reaction.
3) While the temperature was kept at 130-135°C, and the pressure was kept below -0.02 Mpa, 4196 Kg propylene oxide and 155 Kg glycerol (premixed with 7.8 g phosphoric acid) were simultaneously continuously added. After the addition of propylene oxide and glycerol was completed after 150 min, 2839 kg propylene oxide was further added. After 60 min, the addition of propylene oxide was completed, and the system was reacted fully until there was no obvious decrease in the pressure in the autoclave. The autoclave was evacuated to remove remaining gas, and then the vacuum valve was closed to stop evacuating. The material was discharged after the temperature was cooled to 70-80°C, to obtain the target polymer polyoxypropylene glycerol ether (M ₙ=3000).

The finally obtained target polymer polyoxypropylene glycerol ether (M ₙ=3000) was analyzed to have a DMC content of 30 ppm, a hydroxyl value (mg KOH/g) of 56.93, a viscosity (25°C, mpa·s) of 567, and a molecular weight distribution (weight average molecular weight/number average molecular weight) D of 1.06.

### Comparative Examples 2- 5 (corresponding to Example 4): Preparation of polyoxypropylene ether (M ₙ=3000) from target intermediate polymer polyoxypropylene glycerol ether (M ₙ=800) and glycerol

Except for the reservation ratio of PO, all the conditions and amounts of materials in Comparative Examples 2-5 were the same as those in Example 4. When the reservation ratio of PO is less than 10%, the molecular weight distribution of the target polymer is wide. When the reservation ratio of PO is larger than 80%, the reaction fails to proceed.

| | Reservation ratio of PO | Reaction time min | Molecular weight distribution weight average molecular weight/number average molecular weight |
|---|---|---|---|
| Example 4 | 40% | 210 | 1.06 |
| Comparative Example 2 | 8% | 203 | 1.58 |
| Comparative Example 3 | 10% | 215 | 1.37 |
| Comparative Example 4 | 80% | 619 | 1.39 |
| Comparative Example 5 | 85% | After the introduction of glycerol and PO is started, the pressure in the autoclave does not decrease any longer, and the reaction is terminated. | - |
| Remark | The reservation ratio of PO refers to the ratio of alkylene oxide introduced after the addition of the low molecular weight raw material alcohol is completed to the total amount of alkylene oxide, with the provision that the low molecular weight raw material alcohol and the remaining alkylene oxide are added simultaneously beforehand | | |

**Example 20**: The experiment results obtained in the examples of the present invention are summarized, and the results for the products prepared by the method of the present invention and the prior art method are listed in a table below.

### Results of comparison of polyether polyol prepared from various raw materials

| Raw material low molecular weight alcohol | | Low molecular weight polymer (Mₙ) | Intermediate target polymer (Mₙ) | Target polymer | | | Induction time (min) | Dewatering time (min) |
|---|---|---|---|---|---|---|---|---|
| | | | | Molecular weight (Mₙ) | Hydroxyl value (mg KOH/g) | Molecular weight distribution | | |
| Monohydric alcohol | Allyl alcohol | 200 | 200 | 1496 | 37.5 | 1.22 | 8 | 30 |
| | | 600 | 600 | 1484 | 37.8 | 1.18 | <2 | 30 |
| | | 400 | 400 | 1504 | 37.3 | 1.06 | <2 | 30 |
| | | Prior art | | 1492 | 37.6 | 1.24 | 16 | 80 |
| | Butanol | 200 | 200 | 889 | 63.1 | 1.17 | 8 | 30 |
| | | 600 | 600 | 904 | 62.1 | 1.16 | <2 | 30 |
| | | 400 | 400 | 898 | 62.5 | 1.08 | <2 | 30 |
| | | Prior art | | 893 | 62.8 | 1.21 | 18 | 80 |
| Dihydric alcohol | Ethylene glycol | 400 | 400 | 1617 | 69.4 | 1.18 | 5 | 30 |
| | | 1000 | 1000 | 1605 | 69.9 | 1.18 | <2 | 30 |
| | | 600 | 600 | 1587 | 70.7 | 1.07 | <2 | 30 |
| | | Prior art | | 1587 | 70.7 | 1.21 | 17 | 80 |
| | Propylene glycol | 400 | 400 | 2020 | 55.5 | 1.19 | 5 | 30 |
| | | 1000 | 1000 | 1992 | 56.3 | 1.18 | <2 | 30 |
| | | 600 | 600 | 2008 | 55.8 | 1.07 | <2 | 30 |
| | | Prior art | | 2012 | 55.7 | 1.20 | 15 | 80 |
| | Butylene glycol | 400 | 400 | 2507 | 44.8 | 1.19 | 7 | 30 |
| | | 1000 | 1000 | 2510 | 44.7 | 1.19 | <2 | 30 |
| | | 600 | 600 | 2495 | 45.0 | 1.06 | <2 | 30 |
| | | Prior art | | 2490 | 45.1 | 1.20 | 17 | 80 |
| Trihydric alcohol | Glycerol | 500 | 500 | 3011 | 55.9 | 1.20 | 5 | 30 |
| | | 1200 | 1200 | 2997 | 56.2 | 1.23 | <2 | 30 |
| | | 800 | 800 | 2990 | 56.3 | 1.05 | <2 | 30 |
| | | Prior art | | 3005 | 56.0 | 1.26 | 18 | 80 |

It can be seen from the table above that compared with the target polymer produced in the prior art, the target polymer produced through the technical solution of the present invention has a narrow molecular weight distribution, and the induction time and dewatering time are short during production. By using the technical solution of the present invention, when the molecular weight of the target intermediate polymer is relatively low and high, the molecular weight distribution of the target polymer is wide.

**Example 21:** The results for products, prepared under some reaction conditions different from those in the method of the present invention by which the target intermediate polymer (Mₙ=600) and the target polymer (M ₙ=2500) are prepared with butylene glycol as raw material while the other reaction conditions are kept unchanged, are listed in a table below:

### Results of comparison of the effect of different reaction conditions on the products of the present invention

| Reaction condition | Weight of alkylene oxide initiating the reaction in Step 2)/weight of low molecular weight initiator in Step 1), (%) | Weight of alkylene oxide initiating the reaction in Step 5)/weight of target intermediate polymer in Step 4), (%) | Acid content in initiator in Steps 1) and 4) (ppm) | Hydroxyl value (mg KOH/g) | Molecular weight distribution (weight average molecular weight/number average molecular weight) | Appearance of product |
|---|---|---|---|---|---|---|
| No. 1 | 20 | 20 | 200 | 44.5 | 1.21 | Light brown |
| No. 2 | 3 | 3 | 80 | 44.1 | 1.19 | Colorless and clear |
| No. 3 | 10 | 10 | 50 | 45.1 | 1.06 | Colorless and clear |
| No. 4 | 3 | 3 | 80 | 44.7 | 1.18 | Colorless and clear |
| No. 5 | 10 | 10 | 50 | 44.2 | 1.07 | colorless and clear |
| No. 6 | 25 | 25 | 150 | 44.8 | 1.29 | Light brown |
| No. 7 | 15 | 15 | 250 | 45.1 | The reaction cannot be initiated due to an excessively high acid content. | |
| No. 8 | 22 | 22 | 80 | 44.3 | 1.21 | Dark color |
| No. 9 | 5 | 5 | 30 | 44.5 | 1.12 | colorless and clear |

It can be seen from the table above that during the production of the target polymer through the technical solution of the present invention, when the initiating alkylene oxide is used in a large or small amount, or the acid is used in a large amount, the target polymer has a wide molecular weight distribution. When the acid is used in a large amount, the color of the product is dark. When the acid is used in an excessively large amount, the reaction cannot be initiated.

**Example 22:** The results for products, prepared under the same conditions in the method of the present invention by which the target intermediate polymer (Mₙ=600) and the target polymer (M ₙ=1600) are prepared with ethylene glycol as raw material except that different acids and alkylene oxide are used, are listed in a table below:

### Results of comparison of the effect of different acids and alkylene oxide on the products of the present invention

| Reaction condition | Acid | Alkylene oxide | Amount of DMC catalyst in Step 1) (ppm) | Amount of DMC catalyst in Step 4) (ppm) | Hydroxyl value (mg KOH/g) | Molecular weight distribution (weight average molecular weight/number average molecular weight) |
|---|---|---|---|---|---|---|
| Example 1 | Sulfuric acid | Propylene oxide 100% | 30 | 40 | 70.2 | 1.04 |
| Example 2 | Phosphoric acid | Butylene oxide 100% | 20 | 20 | 70.8 | 1.28 |
| Example 3 | Nitric acid | Ethylene ox-ide 80% Propylene oxide 20% | 10 | 0 | 71.1 | 1.34 |
| Example 4 | Sulfuric acid Phosphoric acid | Ethylene oxide 90% Propylene oxide 10% | 100 | 400 | The proportion of ethylene oxide is relatively high, and the reaction rate is low and the product appears cloudy in a later stage of the reaction. | |
| Example 5 | Sulfuric acid Nitric acid | Ethylene oxide 50% Butylene oxide 50% | 120 | 60 | 70.5 | 1.05 |
| Example 6 | Phosphoric acid Nitric acid | Propylene oxide 50% Butylene oxide 50% | 400 | 0 | 70,0 | 1.07 |
| Example 7 | Sulfuric acid Phosphoric acid Nitric acid | Ethylene oxide 30% Propylene oxide 40% Butylene oxide 40% | 600 | 500 | 69.7 | 1.32 |

It can be seen from the table above that by means of the technical solution of the present invention, the species of acids has no obvious effect on the product under different reaction conditions. When the proportion of ethylene oxide in the alkylene oxide is relatively high, the reaction rate is relatively slow, and the product appears cloudy. When the catalyst is used in a relatively low or high amount, the product has a wide molecular weight distribution.

It should be noted that the foregoing descriptions are merely preferred examples of the present invention, and the protection scope of the present invention is not limited thereto.

## Claims

1. A method of cyclically preparing a polyether polyol as a target polymer, the method comprising: polymerizing a low molecular weight alcohol as a raw material with an alkylene oxide, to obtain a low molecular weight polymer; obtaining an intermediate-target polymer by a first process in a reactor, the first process facilitating a first reaction of the low molecular-weight polymer with the alkylene oxide while a first amount of the low molecular-weight alcohol is introduced into the reactor; and obtaining the target polymer by a second process in the reactor using a first portion of the intermediate-target polymer, wherein a second portion of the intermediate-target polymer is recycled for reproduction of the intermediate-target polymer, wherein a double metal cyanide (DMC) catalyst is used as a catalyst of the first reaction, wherein an acid is used as a promoter of the first reaction, wherein the intermediate-target polymer and the low molecular weight polymer have a same average molecular weight;
the DMC catalyst is a double metal cyanide complex catalyst for ring opening polymerization of epoxy;
the acid is any one of nitric acid, phosphoric acid, and sulfuric acid, or a mixture of any two or three thereof;
the alkylene oxide is one of propylene oxide, butylene oxide, a mixture of ethylene oxide and propylene oxide, a mixture of ethylene oxide and butylene oxide, a mixture of propylene oxide and butylene oxide, and a mixture of ethylene oxide, propylene oxide, and butylene oxide; the raw material low molecular weight alcohol is a monohydric alcohol or a polyhydric alcohol, the monohydric alcohol being one of allyl alcohol or butanol, the polyhydric alcohol being one of ethylene glycol, propylene glycol, butylene glycol, and glycerol, and
the first process comprises the following steps:
1a) introducing the low molecular-weight polymer into the reactor, the low molecular-weight polymer having been pre-added with the DMC catalyst and the acid;
1b) dewatering by a bubbling nitrogen for at least 10 minutes at a first temperature range of 100 - 175 °C under vacuum at a first pressure not higher than - 0.085 MPa;
1c) turning off the bubbling nitrogen and further vacuuming for at least 10 minutes;
2) introducing into the reactor the alkylene oxide in an amount that is no more than 20% by weight (wt%) of the low molecular-weight polymer:
3a) simultaneously and continuously introducing the alkylene oxide and the first amount of the low molecular-weight alcohol into the reactor, the reactor maintained at a second temperature range of 120 - 180 °C and at a second pressure not higher than 0.2MPa;
3b) introducing at least 10 wt% of the alkylene oxide into the reactor after the introducing of the first amount of the low molecular-weight alcohol is completed;
3c) waiting until no substantial pressure drop is observed in the reactor; and
3d) discharging the reactor to obtain the intermediate-target polymer; and wherein when the alkylene oxide is a mixture containing ethylene oxide, the content of ethylene oxide in the mixture is not higher than 80%;
**characterized in that,**
when the target polymer is a polyoxyalkylene ether mono-ol, the average molecular weight of both the low molecular weight polymer and the intermediate-target polymer is 200-600, and preferably 300-500.

2. The method according to claim 1, wherein the second process facilitates a second reaction of the first portion of the intermediate-target polymer with the alkylene oxide while a second amount of the low molecular-weight alcohol is introduced into the reactor,
the DMC catalyst is further used as a catalyst of the second reaction,
the acid is further used as a promoter of the second reaction, and
the second process comprises the following steps:
4a) introducing the first portion of the intermediate-target polymer into the reactor, the first portion of the intermediate-target polymer having been pre-added with the DMC catalyst and the acid;
4b) dewatering by a bubbling nitrogen for at least 10 minutes at a first temperature range of 100 - 175 °C under vacuum at a first pressure not higher than -0.085 MPa;
4c) turning off the bubbling nitrogen and further vacuuming for at least 10 minutes;
5) introducing into the reactor the alkylene oxide in an amount that is no more than 20% by weight (wt%) of the intermediate-target polymer;
6a) simultaneously and continuously introducing the alkylene oxide and the second amount of the low molecular-weight alcohol into the reactor, the reactor maintained at a second temperature range of 120 - 180 °C and at a second pressure not higher than 0.2MPa;
6b) introducing at least 10 wt% of the alkylene oxide into the reactor after the introducing of the second amount of the low molecular-weight alcohol is completed;
3c) waiting until no substantial pressure drop is observed in the reactor; and
3d) discharging the reactor to obtain the target polymer.

3. The method according to claim 1, wherein the content of K+ and Na+ in the low molecular weight polymer initiator in Step 1) is <10 ppm, and preferably < 5 ppm.

4. The method according to claim 1, wherein the DMC catalyst is used in Step 1) in an amount of 10-600 ppm and preferably 20-120 ppm based on the weight of the intermediate-target polymer finally obtained in Step 3).

5. The method according to claim 1, wherein the DMC catalyst is used in Step 4) in an amount of 0-500 ppm and preferably 20-60 ppm based on the weight of the target polymer finally obtained in Step 6).

6. The method according to claim 1, wherein the acid in Steps 1), 3) , 4) and 6) is preferably sulfuric acid, phosphoric acid, and a mixture thereof.

7. The method according to claim 1, wherein the low molecular weight polymer as the first initiator in Steps 1) and 4) contains no more than 200 ppm and preferably no more than 80 ppm acid.

8. The method according to claim 1, wherein the raw material low molecular weight alcohol in Steps 3) and 6) contains no more than 200 ppm and preferably no more than 80 ppm acid.

9. The method according to claim 1, wherein in Steps 3) and 6), the addition of the low molecular weight alcohol is completed ahead of the alkylene oxide, and preferably 20-40 wt% of the alkylene oxide is reserved for being added after the addition of the low molecular weight alcohol is completed.

## Patentansprüche

1. Verfahren zur zyklischen Herstellung eines Polyetherpolyols als ein Zielpolymer, das Verfahren umfasst: Polymerisieren eines niedermolekularen Alkohols als Rohstoff mit einem Alkylenoxid, um ein niedermolekulares Polymer zu erhalten; Erhalten eines Zwischenzielpolymers durch ein erstes Verfahren in einem Reaktor, wobei das erste Verfahren eine erste Reaktion des niedermolekularen Polymers mit dem Alkylenoxid erleichtert, während eine erste Menge des niedermolekularen Alkohols in den Reaktor eingeführt wird, und Erhalten des Zielpolymers durch ein zweites Verfahren in dem Reaktor unter Verwendung eines ersten Teils des Zwischenzielpolymers, wobei ein zweiter Teil des Zwischenzielpolymers zur Reproduktion des Zwischenzielpolymers recycelt wird, wobei ein Doppelmetallcyanid (DMC)-Katalysator als Katalysator der ersten Reaktion verwendet wird, wobei eine Säure als Promotor der ersten Reaktion verwendet wird, wobei das Zwischenzielpolymer und das niedermolekulare Polymer das gleiche durchschnittliche Molekulargewicht haben;
der DMC-Katalysator ist ein Doppel-Metallcyanidkomplex-Katalysator für die Ringöffnungspolymerisation von Epoxid;
die Säure eine beliebige von Salpetersäure, Phosphorsäure und Schwefelsäure oder eine Mischung von zwei oder drei davon ist;
das Alkylenoxid eines von Propylenoxid, Butylenoxid, einer Mischung aus Ethylenoxid und Propylenoxid, einer Mischung aus Ethylenoxid und Butylenoxid, einer Mischung aus Propylenoxid und Butylenoxid und einer Mischung aus Ethylenoxid, Propylenoxid und Butylenoxid ist; der Rohstoff Alkohol mit niedrigem Molekulargewicht ein einwertiger Alkohol oder ein mehrwertiger Alkohol ist, wobei der einwertige Alkohol einer der Alkohole Allyl oder Butanol ist, der mehrwertige Alkohol einer der Alkohole Ethylenglykol, Propylenglykol, Butylenglykol und Glycerin ist, und
das erste Verfahren umfasst die folgenden Schritte:
1a) Einführen des niedermolekularen Polymers in den Reaktor, wobei dem niedermolekularen Polymer zuvor der DMC-Katalysator und die Säure hinzugefügt wurden;
1b) Entwässerung durch Stickstoffblasen für mindestens 10 Minuten in einem ersten Temperaturbereich von 100 - 175 °C unter Vakuum bei einem ersten Druck von nicht mehr als -0,085 MPa;
1c) Abschalten der Stickstoffblasen und weiteres Absaugen für mindestens 10 Minuten;
2) Einführen des Alkylenoxids in den Reaktor in einer Menge, die nicht mehr als 20% des Gewichts (Gew.-%) des niedermolekularen Polymers ausmacht:
3a) Gleichzeitiges und kontinuierliches Einführen des Alkylenoxids und der ersten Menge des niedermolekularen Alkohols in den Reaktor, wobei der Reaktor in einem zweiten Temperaturbereich von 120 - 180 °C und bei einem zweiten Druck von nicht mehr als 0,2 MPa gehalten wird,
3b) Einführen von mindestens 10 Gew.-% des Alkylenoxids in den Reaktor, nachdem das Einführen der ersten Menge des niedermolekularen Alkohols abgeschlossen ist;
3c) Warten, bis kein wesentlicher Druckabfall mehr im Reaktor zu beobachten ist; und
3d) Entleeren des Reaktors, um das Zwischenzielpolymer zu erhalten; und wobei, wenn das Alkylenoxid eine Mischung ist, die Ethylenoxid enthält, der Gehalt an Ethylenoxid in der Mischung nicht höher als 80% ist;
**dadurch gekennzeichnet, dass,**
wenn das Zielpolymer ein Polyoxyalkylenether-Monoöl ist, das durchschnittliche Molekulargewicht sowohl des niedermolekularen Polymers als auch des Zwischenzielpolymers 200-600 und vorzugsweise 300-500 beträgt.

2. Die Methode nach Anspruch 1, wobei der zweite Prozess eine zweite Reaktion des ersten Teils des Zwischenzielpolymers mit dem Alkylenoxid ermöglicht, während eine zweite Menge des niedermolekularen Alkohols in den Reaktor eingeführt wird,
der DMC-Katalysator weiterhin als Katalysator der zweiten Reaktion verwendet wird, die Säure weiterhin als Promotor der zweiten Reaktion verwendet wird und
das zweite Verfahren die folgenden Schritte umfasst:
4a) Einführen des ersten Teils des Zwischenzielpolymers in den Reaktor, wobei der erste Teil des Zwischenzielpolymers mit dem DMC-Katalysator und der Säure vorab hinzugefügt worden ist;
4b) Entwässerung durch Stickstoffblasen für mindestens 10 Minuten in einem ersten Temperaturbereich von 100 - 175 °C unter Vakuum bei einem ersten Druck von nicht mehr als -0,085 MPa;
4c) Abschalten der Stickstoffblasen und weiteres Absaugen für mindestens 10 Minuten;
5) Einführen des Alkylenoxids in den Reaktor in einer Menge, die nicht mehr als 20% des Gewichts (Gew.-%) des Zwischenzielpolymers beträgt;
6a) Gleichzeitiges und kontinuierliches Einführen des Alkylenoxids und der zweiten Menge des niedermolekularen Alkohols in den Reaktor, wobei der Reaktor in einem zweiten Temperaturbereich von 120 - 180 °C und bei einem zweiten Druck von nicht mehr als 0,2 MPa gehalten wird,
6b) Einführen von mindestens 10 Gew.-% des Alkylenoxids in den Reaktor, nachdem das Einführen der zweiten Menge des niedermolekularen Alkohols abgeschlossen ist;
3c) Warten, bis kein wesentlicher Druckabfall mehr im Reaktor zu beobachten ist; und
3d) Entleeren des Reaktors, um das Zielpolymer zu erhalten.

3. Die Methode nach Anspruch 1, wobei der Gehalt an K+ und Na+ in dem niedermolekularen Polymer-Initiator in Schritt 1) <10 ppm und vorzugsweise <5 ppm beträgt.

4. Die Methode nach Anspruch 1, wobei der DMC-Katalysator in Schritt 1) in einer Menge von 10-600 ppm und vorzugsweise 20-120 ppm, bezogen auf das Gewicht des schließlich in Schritt 3) erhaltenen Zwischenzielpolymers, verwendet wird.

5. Die Methode nach Anspruch 1, wobei der DMC-Katalysator in Schritt 4) in einer Menge von 0-500 ppm und vorzugsweise 20-60 ppm, bezogen auf das Gewicht des schließlich in Schritt 6) erhaltenen Zielpolymers, verwendet wird.

6. Die Methode nach Anspruch 1, wobei die Säure in den Schritten 1), 3), 4) und 6) vorzugsweise Schwefelsäure, Phosphorsäure und eine Mischung davon ist.

7. Die Methode nach Anspruch 1, wobei das niedermolekulare Polymer als erster Initiator in den Schritten 1) und 4) nicht mehr als 200 ppm und vorzugsweise nicht mehr als 80 ppm Säure enthält.

8. Die Methode nach Anspruch 1, wobei der Rohstoff Alkohol mit niedrigem Molekulargewicht in den Schritten 3) und 6) nicht mehr als 200 ppm und vorzugsweise nicht mehr als 80 ppm Säure enthält.

9. Die Methode nach Anspruch 1, wobei in den Schritten 3) und 6) die Zugabe des niedermolekularen Alkohols vor dem Alkylenoxid abgeschlossen wird und vorzugsweise 20-40 Gew.-% des Alkylenoxids für die Zugabe nach Abschluss der Zugabe des niedermolekularen Alkohols vorbehalten wird.

## Revendications

1. Procédé de préparation cyclique d'un polyéther polyol en tant que polymère cible, le procédé comprenant : la polymérisation d'un alcool de faible poids moléculaire comme matière première avec un oxyde d'alkylène, pour obtenir un polymère de faible poids moléculaire ; l'obtention d'un polymère cible intermédiaire par un premier procédé dans un réacteur, le premier procédé facilitant une première réaction du polymère de faible poids moléculaire avec l'oxyde d'alkylène tandis qu'une première quantité de l'alcool de faible poids moléculaire est introduite dans le réacteur ; et l'obtention du polymère cible par un second procédé dans le réacteur en utilisant une première partie du polymère cible intermédiaire, dans lequel une seconde partie du polymère cible intermédiaire est recyclée pour la reproduction du polymère cible intermédiaire, dans lequel un catalyseur de cyanure métallique double (CMD) est utilisé comme catalyseur de la première réaction, dans lequel un acide est utilisé comme promoteur de la première réaction, dans lequel le polymère cible intermédiaire et le polymère de faible poids moléculaire ont un même poids moléculaire moyen ;
le catalyseur CMD est un catalyseur de type complexe de cyanure métallique double pour la polymérisation par ouverture de cycle de l'époxy ;
l'acide est l'un quelconque des acides nitrique, phosphorique et sulfurique, ou un mélange de deux ou trois de ces acides ;
l'oxyde d'alkylène est l'un des suivants : oxyde de propylène, oxyde de butylène, un mélange d'oxyde d'éthylène et d'oxyde de propylène, un mélange d'oxyde d'éthylène et d'oxyde de butylène, un mélange d'oxyde de propylène et d'oxyde de butylène, et un mélange d'oxyde d'éthylène, d'oxyde de propylène et d'oxyde de butylène ; la matière première alcool de faible poids moléculaire est un alcool monohydrique ou un alcool polyhydrique, l'alcool monohydrique étant l'un des alcools allyliques ou le butanol, l'alcool polyhydrique étant l'un des éthylèneglycol, propylèneglycol, butylèneglycol et glycérol, et
le premier procédé comprend les étapes suivantes :
1a) l'introduction du polymère de faible poids moléculaire dans le réacteur, le polymère de faible poids moléculaire ayant été pré-additionné avec le catalyseur CMD et l'acide ;
1b) déshydratation par barbotage d'azote pendant au moins 10 minutes dans une première plage de température de 100 à 175 °C sous vide à une première pression non supérieure à -0,085 MPa ;
1c) l'arrêt de l'azote bouillonnant et la poursuite de la mise sous vide pendant au moins 10 minutes ;
2) l'introduction dans le réacteur de l'oxyde d'alkylène en une quantité qui n'est pas supérieure à 20% en poids (wt%) du polymère de faible poids moléculaire :
3a) l'introduction simultanée et continue de l'oxyde d'alkylène et de la première quantité de l'alcool de faible poids moléculaire dans le réacteur, le réacteur étant maintenu dans une seconde plage de température de 120 à 180 °C et à une seconde pression non supérieure à 0,2 MPa ;
3b) l'introduction d'au moins 10 % en poids de l'oxyde d'alkylène dans le réacteur après que l'introduction de la première quantité de l'alcool de faible poids moléculaire soit terminée ;
3c) l'attente jusqu'à ce qu'aucune chute de pression substantielle ne soit observée dans le réacteur ; et
3d) la décharge du réacteur pour obtenir le polymère à cible intermédiaire ; et dans lequel lorsque l'oxyde d'alkylène est un mélange contenant de l'oxyde d'éthylène, la teneur en oxyde d'éthylène dans le mélange n'est pas supérieure à 80 % ;
**caractérisé en ce que,**
lorsque le polymère cible est un mono-ol d'éther de polyoxyalkylène, le poids moléculaire moyen à la fois du polymère de faible poids moléculaire et du polymère cible intermédiaire est de 200 à 600, et de préférence de 300 à 500.

2. Procédé selon la revendication 1, dans lequel le second processus facilite une seconde réaction de la première partie du polymère à cible intermédiaire avec l'oxyde d'alkylène tandis qu'une seconde quantité de l'alcool de faible poids moléculaire est introduite dans le réacteur,
le catalyseur CMD est encore utilisé comme catalyseur de la deuxième réaction,
l'acide est en outre utilisé comme promoteur de la deuxième réaction, et
le deuxième procédé comprend les étapes suivantes :
4a) l'introduction de la première partie du polymère à cible intermédiaire dans le réacteur, la première partie du polymère à cible intermédiaire ayant été pré-additionnée avec le catalyseur CMD et l'acide ;
4b) la déshydratation par un bullage d'azote pendant au moins 10 minutes dans une première plage de température de 100 à 175 °C sous vide à une première pression non supérieure à -0,085 MPa ;
4c) l'arrêt de l'azote bouillonnant et la poursuite de la mise sous vide pendant au moins 10 minutes ;
5) l'introduction dans le réacteur de l'oxyde d'alkylène en une quantité qui n'est pas supérieure à 20% en poids (wt%) du polymère de cible intermédiaire ;
6a) l'introduction simultanée et continue de l'oxyde d'alkylène et de la seconde quantité de l'alcool de faible poids moléculaire dans le réacteur, le réacteur étant maintenu dans une seconde plage de température de 120 à 180 °C et à une seconde pression non supérieure à 0,2 MPa ;
6b) l'introduction d'au moins 10 % en poids de l'oxyde d'alkylène dans le réacteur après que l'introduction de la seconde quantité de l'alcool de faible poids moléculaire soit terminée ;
3c) l'attente jusqu'à ce qu'aucune chute de pression substantielle ne soit observée dans le réacteur ; et
3d) la décharge du réacteur pour obtenir le polymère cible.

3. Procédé selon la revendication 1, dans lequel la teneur en K+ et Na+ dans l'initiateur de polymère de faible poids moléculaire à l'étape 1) est < 10 ppm, et de préférence < 5 ppm.

4. Procédé selon la revendication 1, dans lequel le catalyseur CMD est utilisé à l'étape 1) en une quantité de 10-600 ppm et de préférence de 20-120 ppm par rapport au poids du polymère de cible intermédiaire finalement obtenu à l'étape 3).

5. Procédé selon la revendication 1, dans lequel le catalyseur CMD est utilisé à l'étape 4) en une quantité de 0-500 ppm et de préférence de 20-60 ppm par rapport au poids du polymère cible finalement obtenu à l'étape 6).

6. Procédé selon la revendication 1, dans lequel l'acide dans les étapes 1), 3), 4) et 6) est de préférence l'acide sulfurique, l'acide phosphorique, et un mélange de ceux-ci.

7. Procédé selon la revendication 1, dans lequel le polymère de faible poids moléculaire comme premier initiateur dans les étapes 1) et 4) ne contient pas plus de 200 ppm et de préférence pas plus de 80 ppm d'acide.

8. Procédé selon la revendication 1, dans lequel la matière première alcool de faible poids moléculaire dans les étapes 3) et 6) ne contient pas plus de 200 ppm et de préférence pas plus de 80 ppm d'acide.

9. Procédé selon la revendication 1, dans lequel dans les étapes 3) et 6), l'addition de l'alcool de faible poids moléculaire est achevée avant l'oxyde d'alkylène, et de préférence 20 à 40% en poids de l'oxyde d'alkylène sont réservés pour être ajoutés après que l'addition de l'alcool de faible poids moléculaire soit achevée.
